# EUROPEAN PATENT SPECIFICATION

(11) **EP 3 387 853 B1**
(45) Date of publication and mention of the grant of the patent: **29.04.2020**
(21) Application number: 16802065.9
(22) Date of filing: 29.11.2016
(51) Int. Cl.: H04W 8/20, H04W 8/18, H04W 4/00, H04W 4/16, H04L 29/06, H04L 12/24

(54) **METHOD FOR CONFIGURING A WIRELESS DEVICE FOR USING VOICE OVER LTE**
VERFAHREN ZUR KONFIGURIERUNG EINES DRATHLOSGERÄT FÜR DIE NUTZUNG VON VOICE OVER LTE
PROCÉDÉ DE CONFIGURATION D'UN DISPOSITIF SANS FIL PERMETTANT D'UTILISER LA VOIX SUR LTE

(30) Priority: 08.12.2015 EP 15198445
(43) Date of publication of application: 17.10.2018
(73) Proprietor: THALES DIS AIS Deutschland GmbH, 81541 München (DE)
(72) Inventor: BREUER, Volker, 16727 Boetzow (DE); WEHMEIER, Lars, 14612 Falkensee (DE)
(74) Representative: Grevin, Emmanuel
(86) International application number: PCT/EP2016/079069
(87) International publication number: WO 2017/097629

(56) References cited:
- US-A1- 2013 340 059
- US-A1- 2015 327 207
- "Smart Cards; Embedded UICC; Technical Specification (Release 13);ETSI TS 103 384", ETSI DRAFT; ETSI TS 103 384, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP - SCP-WG-T, no. V0.18.0, 29 September 2015 (2015-09-29), pages 1-26, XP014263701,

## Description

### FIELD OF THE INVENTION

The present invention relates to a method for configuring a wireless device. The invention also pertains to a wireless device using said method. The invention further relates to a parameter server supporting said method.

### BACKGROUND OF THE INVENTION

In the field of the fourth generation cellular wireless communication the first time a technology is described which incorporates a voice communication service based on IP packets in the technology standard itself. This technology is called Voice over LTE, or abbreviated VoLTE. First network operator currently implement this feature in their LTE networks. For future technology standards similar solutions are expected to be envisaged as well.

While the VoLTE standard technology as such is standardized, however the various configuration parameters for using VoLTE are populated operator specific. Such configuration parameters are in particular defined in GSMA IR.92 as one potential set of several configurations. They comprise various areas comprising but not limited to quality of service, URI, timers, codecs, voice quality options etc. and configuration parameters for the IMS (IP Multimedia subsystem) service as such, where VoLTE is based upon.

For a mobile handset, which typically is sold as operator branded, it is simply to carry out a pre-configuration before shipping.

For machine-type communication (MTC) devices, e.g. a car providing connected functionality, such pre-configuration is not possible. When the customer gets his car from the local car dealer or previous owner, he will put his SIM card in the car or pair the car with his mobile phone via SIM access profile, hence no pre-configuration is possible in such cases. The same applies to a wireless device roaming in other cellular networks. Further a pre-configuration for the home cellular network shipped with SIM card might be outdated after a while.

In the worst but not unlikely case this situation leads to the result that a wireless device cannot or at least not reliably operate VoLTE in a cellular network, when the configuration parameters are not properly set. Currently there is no solution known which would mitigate the bad customer experience that VoLTE will not be operable within specific cellular networks.

According to US2015/0327207 it is proposed to store in at least one SIM card of a wireless communication device network operator policies enabling Internet Protocol Multimedia Subsystem (IMS) services for a wireless communication device using said at least one SIM card. The stored network operator policies identify enabled IMS services for the respective SIM card. It is suggested that from said network operator policies a registration type for each enabled IMS service for said at least one SIM may be derived. This may also apply for the roaming situation. However, this solution does not indicate the possibility to access IMS service, in particular voice services in absence of network operator policies for said voice service.

In US2013/0340059 it is suggested to download provisioning information from a provisioning server to a communication device equipped with an unprovisioned UICC. The invention copes with identifying which services provided by a plurality of MNOs is to be selected and involves a second communication device for using said credentials for communication with the provisioning server.

However the solution is silent with regards to IMS service configurations and in particular to reduce the amount of downloadable data by downloading the difference between available IMS service configuration and the configuration to be downloaded.

It is therefore the goal of present invention to overcome the mentioned disadvantages and to propose a solution for pre-configuration of VoLTE parameter during runtime of the wireless device.

Further alternative and advantageous solutions would, accordingly, be desirable in the art.

### SUMMARY OF THE INVENTION

For this it is according to a first aspect of the invention suggested a method to operate a wireless device according to claim 1. It is further suggested according to a second aspect of the invention a wireless device according to claim 9. In a third aspect of the invention it is proposes a parameter server according to claim 15.

According to the first aspect of the invention it is proposed a method for a wireless device of providing a voice service via packet switched communication with an operating cellular network, being the cellular network the wireless device is operating in, wherein the wireless device is physically connected to an identification unit (UICC), said identification unit comprising a first memory block for storing at least one set of configuration parameter for said voice service within a first cellular network, further the wireless device is in camping relationship with a base node (eNodeB) of the operating cellular network, the method comprising the step for the wireless device of:
- prior to setting up a voice call, checking with the identification unit if configuration parameter applicable to the operating cellular network are available,
- if not, requesting said configuration parameter from a parameter server accessible for the operating cellular network,
- receiving said configuration parameter from said parameter server,
- storing at least a portion of received configuration parameter in said first memory block of the identification unit,
- if the configuration parameter are available, or previously received from the parameter server:
- providing said configuration parameter to the wireless device,
- setting up a voice call using said configuration parameter.

The method applies to a wireless device configured to operate in a cellular network which provides a voice service via packet switched communication. That is in particular true for voice over LTE (VoLTE) in a cellular network supporting the technology standard of long term evolution (LTE) or 4^{th} generation (4G).

By now the native voice services in cellular networks prior to LTE were operated on the circuit switched (CS) domain. Whereas the packet switched (PS) domain is dedicated for data transmissions, e.g. access to websites, download of data etc. Prior to the specification and implementation of VoLTE, internet-based voice services have been defined, as on normal computers connected to the internet as well. But those services required a special software on each communicating device and each device had a single identifier which is different from the MSISDN connected to the identification unit, in particular UICC, connected to the wireless device.

Hence a native service being part of the 4G cellular network and allowing to call under the MSISDN was desired. However, similar services will be defined for future technology standard generations. The inventive method is generally foreseen to apply to those services as well.

VoLTE is based on IP Multimedia subsystem (IMS), hence the proposed method generally applies also to a whole set of IMS configuration data including VoLTE, presence / location service, video telephony, SMS over IMS, USSD and any other services provided by the IMS. Hereinafter VoLTE is used as one example of an IMS service.

For carrying out the VoLTE service, the wireless device preferably comprises a component, in particular a software module, implementing the procedures necessary for operating voice calls with the serving eNodeB, that is the base node of the cellular network where the wireless device is currently camping on. That component is called hereinafter VoLTE client, without meaning a limitation in terms of applicability to future technology standard generation voice service.

The wireless device is further connected with an identification unit. Such identification unit is an in particular removable module which preferably is originally designed for holding in a secured manner the authentication credentials for identifying and authenticating in the cellular network. Typically such identification unit is embodied by a universal integrated circuit card

(UICC). That identification unit further comprises a first memory block for storing at least one set of configuration parameter. Preferably the identification unit further provides an exchange interface for the wireless device to request data from such first memory block. Further other embodiments of the identification unit, in particular a machine-type identification module (MIM) or an embedded SIM (eSIM resp. eUICC), are also foreseen.

The configuration parameter for said voice service are such parameter which define how the wireless device, in particular the VoLTE client is operating, and that assures interoperability with the serving eNodeB and/or the called resp. calling device.

In a preferred embodiment the first memory block stores the set of configuration parameter directly. In another preferred embodiment only differences (diffs) to a default set of configuration parameter are stored in order to save space.

The method starts with the consideration by the wireless device upon camping on a base node of the cellular network, in particular after registration of the wireless device in the cellular network, if the wireless device is conditioned to operate voice services via packet switched communication in the cellular network, the wireless device is currently operating with, hereinafter the operating cellular network.

For that, at a time prior to the first voice call over said voice service, it is checked with the identification unit if appropriate configuration parameter applicable to the operating cellular network are available. This is preferably done by sending a request from the wireless device via the exchange interface to the identification unit requesting if configuration parameter are stored in the first memory block of the identification unit.

It is further foreseen as part of another advantageous embodiment of the invention that only parts of the configuration parameter, in particular a reference, a version or routing information related to the parameter server, are stored in the first memory block of the identification unit, and the other parts of the configuration parameter are stored or cached in a memory block of the wireless device itself.

Generally three situations with respect to the configuration parameter are possible to occur prior to a first voice call: No configuration parameter are stored, not appropriate configuration parameter are stored, and appropriate configuration parameter are stored.

If configuration parameter are stored, discriminating if the configuration parameter are appropriate is in particular done by at least one of: Checking if the configuration parameter are assigned to another cellular network, e.g. of another operator, or if the configuration parameter are outdated.

For the situation of missing configuration parameter, this means that unconditionally configuration parameter need to be retrieved for operating the voice service.

Except for the case that the stored configuration parameter are not outdated, it is therefore necessary to retrieve appropriate and up to date configuration parameter in order to operate the VoLTE client with the operating cellular network

For that the wireless device requests said configuration parameter from a parameter server. Said parameter server is accessible for the operating cellular network. That means in particular it is either part of the cellular network, or it is connected to components of the cellular network allowing an access from the wireless device, via base node and further cellular network specific components, like evolved packet core (EPC).

In the case that the wireless device is operating in its home cellular network the parameter server is preferably reached by means of cellular network resources. That is, a request is forwarded to the parameter server by the mobile management entity. From there the parameter server provides the requested configuration data. This is in particular preferable even if a set of configuration parameter for the home cellular network is already available, in order to check, if the configuration parameter are up to date.

In response to said request to the parameter server, the wireless device receives, if the requested data are available, the requested configuration parameter. Preferably as a first step after reception of the data, they are stored in the first memory block. That is preferable as for the next occasion where the wireless device needs to access the configuration parameter, they are available for accessing and configuration of the VoLTE client. Preferably that step is carried out before configuring the VoLTE client with the just downloaded data.

If appropriate configuration parameter are available from the identification unit, or after downloading them, then these configuration data are applied to the wireless device, in particular to the VoLTE client. That means in particular, that the received configuration parameter or at least parts thereof are made available to the VoLTE client. How that application of the configuration parameter are is carried out is generally implementation specific. Preferably a configuration file which is readable by the VoLTE client is made available, in particular by adding configurations to existing configuration files. Typically each configuration data is made available by a key/value pair in the configuration file, following a specific syntax, e.g. XML, CSV, JSON.

The VoLTE client preferably is then triggered to re-read the configuration file, in particular by restarting or re-initialization.

After that application of the configuration parameter the wireless device is ready to set up a voice call, either incoming or outgoing, by virtue of the serving base node, with another communication endpoint, be it another wireless device, preferably implementing said method, or a landline telephone.

For the case that the wireless device is not operating in its home cellular network, it is proposed another embodiment of the invention.

It is therefore proposed a method wherein the first cellular network according to the identification unit is different from the operating cellular network, hereinafter the visited cellular network
wherein the parameter server is a configuration server being part of the visited cellular network, further comprising the steps of:
- retrieving from the first cellular network routing information of said configuration server of the visited cellular network,
- and the step of storing of received configuration parameter is carried out in a second memory block for storing at least a portion of received configuration parameter for at least one additional cellular network.

Here is the situation described that the cellular network the wireless device is operating in is not the home cellular network, but the visited cellular network. This is identified according to the identification unit, that means the identification unit holds data identifying the home network, in particular the MCC (Mobile Country Code) and MNC (Mobile Network Code). If in particular the MNC from the identification unit differs from the MNC of the operating cellular network, then the wireless device is roaming, and therefore the operating cellular network is a visited cellular network,

According to this embodiment a second memory block for storing configuration parameter is foreseen, in particular for storing those configuration parameter for visited cellular networks different to the home cellular network.

According to a preferred embodiment the second memory block is part of at least one of
- the wireless device,
- said identification unit, or
- a combination of both.

The share between wireless device and identification unit is in particular dependent upon the amount of configuration parameter. Preferably those information which are provided by the network operator are stored in the identification unit, and therefore it is advantageous to have also available the second memory block in the identification unit.

Preferably the identification unit provides further memory blocks for further sets of configuration parameters of a plurality of visited cellular networks. In any case, there is a need for a method to download the configuration parameter for the currently visited cellular network.

As such it is suggested in present embodiment that the parameter server is a configuration server being part of the visited cellular network. However the wireless device needs to address such configuration server. For doing so it requests the routing information for accessing the configuration sever from the home cellular network.

According to another preferred embodiment the routing information relating to the configuration server comprises at least one out of:
- an access point name,
- an unified resource identifier,
- an identification token, adapted to be submitted to a name server being part of the operating cellular network, which is configured to resolve the identification token in routing information.

This embodiment suggests various incarnations of routing information. An access point name (APN) is typically used as endpoint in a cellular network, a unified resource identifier is a qualified name, like a URL. When a name server is present in the cellular network, it further allows to use an identification token e.g. a virtual access name, that is resolved to a respective qualified identifier like a URI or APN.

For the case that the wireless device is not operating in its home cellular network, further another preferred embodiment of the invention is suggested. It is therefore suggested a method wherein the first cellular network according to the identification unit is different from said operating cellular network, wherein the parameter server is a remote configuration server, and routing information relating to the remote configuration server is stored in the identification unit, further comprising the step of storing of received configuration parameter is carried out in a second memory block for storing at least a portion of received configuration parameter for at least one additional cellular network.

According to this embodiment the parameter server is situated in a remote configuration server outside of the visited cellular network, that means preferably accessible via internet or other connections.

For accessing that configuration server resp. parameter server routing information, preferably in the form of an URI, are needed. According to this embodiment the routing information for accessing said parameter server are stored in the identification unit. This is in particular advantageous as the identification unit is equipped with configuration information by the home cellular network operator, e.g. before handing over to the owner of the wireless device. Thus the parameter server, which is preferably not cellular network specific, is accessible from practically all cellular networks.

In any case of a roaming wireless device the configuration parameter received from the parameter server are eventually stored in the second memory block. Thus, when the wireless device restarts again or returns after a period of operating in another cellular network - in particular the home cellular network - to said cellular network, then the step of downloading said configuration parameter do not need to be carried out again, and the VoLTE client can be configured without delay with the stored configuration parameter.

In another preferred embodiment of the invention it is proposed that the step of receiving of said configuration parameter comprises reception of parameter data indicating the difference between stored configuration parameter and requested configuration parameter for the cellular network.

According to this embodiment the amount of downloaded data is reduced insofar that only those configuration parameter that differ from those stored in the identification unit are provided. As many configuration parameter may stay stable or are common between many cellular networks, that embodiment immensely reduces the amount of downloaded data.

With respect to the stored configuration parameter this may also affect a default set of configuration parameter, which is by default preconfigured from the home cellular network operator. When now an actual set of configuration parameter is requested then only the differing parameter need to be provided, as the default set of configuration parameter is known to the cellular network, resp. the parameter sever.

Additionally in case of availability of a second memory block, it is advantageous to store in the second memory block only the differences to the configuration parameter stored in the first memory block. By doing so, memory space is saved in the second memory block. Additionally more than one set of configuration parameter are possibly stored in the second memory block. Compared to storing the complete data in the second memory block it is with this preferred embodiment at least possible to store more sets of configuration parameter in the second memory block than without.

This is further advantageous in conjunction with another embodiment, which refers to version information regarding the stored set of configuration parameter. According to that it is proposed that during requesting of said configuration parameter a version indicator is submitted to the parameter server, the version indicator being unique for a certain set of configuration parameter, and wherein the parameter server submits said configuration parameter in case said version indicator indicates an earlier version than the configuration parameter available at the parameter server.

This embodiment is advantageous for the case that a set of configuration parameter is stored in a memory block, in particular within the identification unit. However, that does not necessarily mean that the configuration parameter are appropriate. Hence the wireless device needs an indication for figuring out if the configuration parameter are appropriate, in particular up to date. For that the version indicator is stored with the configuration parameter. Preferably the version indicator is a incrementing version number, a timestamp or an indicator derived from one or both of these.

This situation is applicable to the roaming and the non-roaming scenarios. Said version indicator is submitted to the parameter server. Based on that version indicator the parameter server is configured to identify if the configuration parameter are up to date by comparing with the version indicator of the configuration parameter available at the parameter server.

Preferably it is defined a request to the parameter server for checking if new configuration parameter are available. Alternatively it is foreseen that in the request for downloading the up to date configuration parameter the version indicator of the configuration parameter currently stored in the memory block is submitted. When the version is up to date, the response from the parameter server only indicates that no download is needed, resp. that the version indicator matches the one of the latest version held in the parameter server. Otherwise the requested configuration parameter are provided from the parameter server.

It is further advantageous if the version of the up to date configuration parameter in the parameter server is available at the cellular network, without accessing the parameter server, in particular when the parameter server is located outside of the cellular network. That saves signalling resources within the cellular network.

The version number will change when only one parameter has changed. Hence, when in that situation it is figured out that the version information of the stored set of configuration parameter differs from the version information of the set of configuration parameter stored in the parameter server, then an update is necessary.

For doing so preferably only the changed parameters are downloaded to the wireless device, and only that changed parameters needs to be applied to the VoLTE client.

In another preferred embodiment it is suggested that the step of requesting of said configuration parameter is carried out in response to expiry of a time trigger.

This embodiment is in particular advantageous for wireless devices operating for a long time in the same cellular network, in particular machine-to-machine devices. With that embodiment the inventive method and/or its embodiments are carried out at registration, but also time triggered. In particular in conjunction with the stored version indicator it is advantageous if after a predefined amount of time the wireless device sends another request to the parameter server, resp. the cellular network, in order to figure out if any changes at the configuration parameter have occurred.

If so, then the set of configuration parameter, or preferably a diff compared to the previously used version of configuration parameter is downloaded to the wireless device.

Further on occasion of a running session or during registration with the VoLTE / IMS service the cellular network may indicate to the wireless device that the currently used version of the configuration parameter is outdated. In that case the wireless device would carry out the update operation independent of a time trigger.

By that embodiment it is assured that automatically without any manual intervention the wireless device is accurately configured for operating VoLTE, even when it is not restarted.

According to a second aspect of the invention it is proposed a wireless device for operating in a cellular network by means of a camping relationship with a base node of the operating cellular network, the wireless device being configured to provide voice service via packet switched communication with a cellular network, further being physically connected to an identification unit, said identification unit comprising a first memory block for storing at least one set of configuration parameter for said voice service within a first cellular network, said wireless device is further configured, prior to setting up a voice call, to check with the identification unit if configuration parameter applicable to the operating cellular network are available,
- if not, request said configuration parameter from a parameter server accessible for the operating cellular network,
- receive said configuration parameter from said parameter server,
- store at least a portion of received configuration parameter in said first memory block of the identification unit,
- if the configuration parameter are available, or previously received from the parameter server:
- apply said configuration parameter to the wireless device,
- set up a voice call using said configuration parameter.

This aspect of the invention shares the advantages of the first aspect of the invention.

In third aspect of the invention it is proposed a parameter server for providing configuration parameter for a voice service via packet switched communication in a cellular network the parameter server is accessible from, further configured to receive a request from a wireless device operating in the cellular network comprising a version indicator being unique for a certain set of configuration parameter, to compare said received version indicator with the version indicator assigned to the set of configuration parameter stored accessible for the parameter server, and to submit said set of configuration parameter to the requesting wireless device, when the received version indicators indicated an earlier version than the version indicator of the stored configuration parameter.

The parameter server according to this aspect of the invention is either situated within a cellular network or accessible by at least one cellular network. The parameter server is configured to store configuration parameter for a voice service via packet switched communication in at least one cellular network. When a request from a wireless device is submitted to the parameter server it at least comprises a version indicator indicating the version of the configuration parameter stored in the wireless device.

When the parameter server is situated outside of the cellular network, preferably the request also comprises an indication relating to the cellular network, where the requesting wireless device is currently operating in.

In the parameter server another version indicator is maintained. Whenever a change to the configuration parameter of a cellular network is carried out, then the version indicator is modified, in particular incremented.

Thus, with the version indicator received from the wireless device the parameter server is able to figure out first, whether the version indicators differ. Advantageously it is also capable to figure out which changes of the configuration parameter are missing, in particular when older versions of the configuration parameter are held.

With that the parameter server is capable to submit either the complete set of configuration parameter or at least the difference between the configuration stored in the identification unit of the requesting wireless device and the up to date configuration parameter. Preferably the wireless device indicates with the request its capability to process either the complete configuration parameter set or only the difference.

When no difference between the submitted version indicator and the version indicator assigned to the stored set of configuration parameter appears, then preferably the parameter server sends a response indicating that no update of configuration parameter is necessary.

When no version indicator is submitted, in any case the configuration parameter are provided for the cellular network the wireless device is operating in when submitting the request to the wireless device.

As it is shown this invention advantageously solves the depicted problem of appropriately configuring a wireless device for operating in the voice service via packet switched communication in a cellular network, in particular voice over LTE.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a wireless device of the type to which the present invention is applied as a first embodiment in connection with a cellular network;
- Fig. 2: shows a wireless device of the type to which the present invention is applied as a second embodiment in connection with a visited cellular network connected to the home cellular network;
- Fig. 3: represents a wireless device of the type to which the present invention is applied as a third embodiment in connection with a cellular network and a parameter server;
- Fig. 4: shows in a sequence diagram the steps for initialization of the wireless device according to another preferred embodiment of the invention;
- Fig. 5: represent a flow chart indicating another preferred embodiment of the invention.

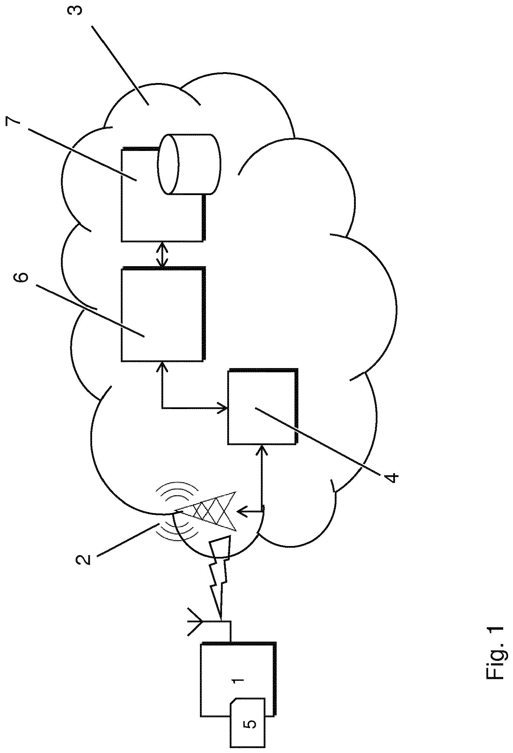

FIG. 1 schematically shows a wireless device 1 of the type to which the present invention is applied to as an embodiment. It is operating in camping relationship with a base node 2 of a cellular network 3, the base node is called the serving base node. The wireless device is a device configured to provide voice service via packet switched communication. That means, no circuit switched domain - like in 2G or 3G - is required, but the voice is transported as IP packets between wireless device and cellular network, and typically eventually the device with that the voice connection is set up.

For LTE resp. 4G networks such a voice service is already defined and known under the term Voice over LTE (VoLTE). In the following it is assumed the cellular network 3 is a LTE network, hence the voice service is VoLTE.

The wireless device 1 further comprises a VoLTE client, that is a component, in particularly a software module, which implements the procedures for setting up and processing the VoLTE call with the cellular network of the serving base node 2. In LTE the base node is called eNodeB (eNB).

The wireless device 1 further is equipped with an identification unit 5. Such identification unit is in particular a subscription identification module (SIM), resp. a universal integrated circuit card (UICC), which holds the authentication credentials for authentication in the respective cellular network.

The identification unit further comprises a memory block for storing at least one set of configuration parameter for the voice service, in the following the VoLTE parameter.

Such VoLTE parameter in particular comprise information relating to codecs and codec related settings like frame/bit rates etc., further timers, in particular retry timers, quality of service settings, addresses / APNs, application Id etc. Further parameters applying to other IMS service like presence / location based service, video telephony, SMS via IMS/SGSN are also foreseen to be stored within said configuration parameter set. For those services the proposed invention is also applicable.

Usually, when the wireless device is operating within the home cellular network resp. home public land mobile network (HPLMN), then the identification unit 5 should have available all VoLTE parameters. Thus, the wireless device 1 can launch or accept VoLTE calls, by virtue of a initialization routine, preferably upon startup, wherein the wireless device, resp. the VoLTE client, requests from the identification unit 5 the respective VoLTE parameters, and thus configures the VoLTE client for incoming or outgoing VoLTE calls.

However this embodiment of present invention is designed for the situation that the identification unit 5 has stored no or no up to date set of VoLTE parameters. This is typically identified during the initialization routine. Part of this initialization routine is in particular to identify the current version of the VoLTE parameters in the cellular network 3 by launching a respective request to the cellular network, and compare the version indicator received in response to this request with the version indicator of the VoLTE parameter set stored in the identification unit 5.

When the wireless device 1 identifies a need for an up to date set of VoLTE parameters in the operating cellular network it requests via the serving eNodeB 2 the missing VoLTE parameters from the cellular network. The request is dedicated to a parameter server 7 within the cellular network 3. Typically the request is handled in the evolved packet core (EPC) 4, comprising in particular the mobility management entity (MME), the serving gateway (S-GW) and the packet data network gateway (P-GW).

Preferably the parameter server 7 storing the VoLTE parameter is located with the Home Subscriber Server (HSS) 6. Preferably the request for the VoLTE parameter is forwarded to the parameter server 7 via the MME.

Finally, when the respective VoLTE parameter set is identified in the parameter server 7 it is forwarded to the requesting wireless device 1. The wireless device stores the received VoLTE parameter in the identification unit 5 and configures the VoLTE client with the received VoLTE parameter.

Eventually the wireless device is now in the shape to carry out VoLTE calls within the cellular network it is currently operating in.

Should the wireless device not be able to receive VoLTE parameter from the cellular network, and in particular no default parameter set is available or sufficient for operation, then the wireless device preferably switches to Circuit Switched Fallback (CSFB), and uses the classical voice operation approach, which has this representation also available for LTE.

The shown embodiment only covers the situation that a wireless device is operating in its home cellular network, preferably with a pre-configured identification unit 5.

This embodiment does not work for a wireless device 1 operating with a cellular network 3, which is not the home cellular network, but a visited cellular network. The home cellular network is the one which provides resp. provisions the identification unit 5. This is in particular identified by MCC and MNC. In this case the wireless device has no access to the Home Subscription Server of the visited cellular network.

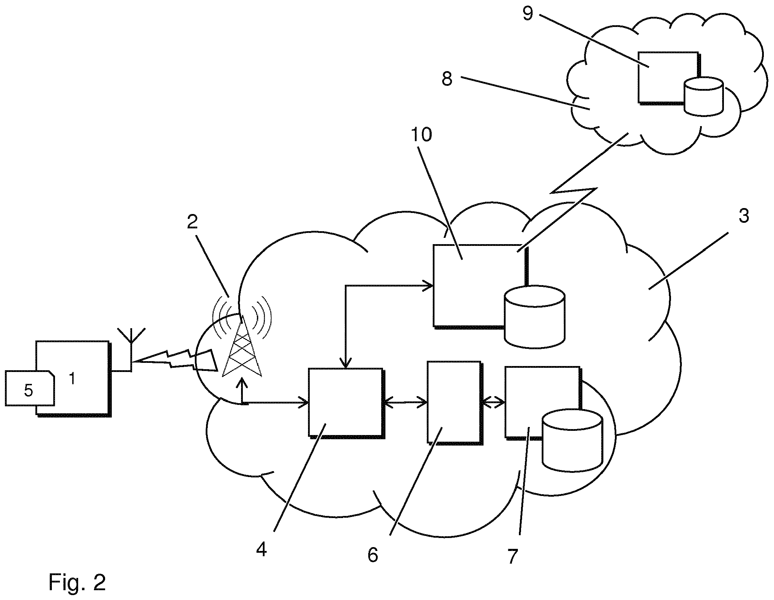

Hence, as shown in FIG. 2, it is necessary to provide the wireless device with routing information relative to the parameter server 7 of the visited cellular network.

For doing so, a request from the wireless device for such routing information is handled in the visited cellular network preferably via the visited location register (VLR) 10 resp. depending on the chosen architecture via ICSCF (interrogating call state control function or IBCF (Interconnection Border Control Function). From there the home cellular network 8 is accessed and there a home configuration server 9, in particular situated with the HSS, provides the routing information which are then sent to the wireless device. By means of these routing information the wireless device 1 has now all what is necessary to route the request for up to date VoLTE parameter to the local parameter server 7 of the visited cellular network 3.

Preferably the identification unit or the wireless device itself comprise at least a second memory block for storing VoLTE parameter for cellular networks different from the home cellular network 8. Preferably the second memory block only holds the differences to the VoLTE parameter held in the first memory block.

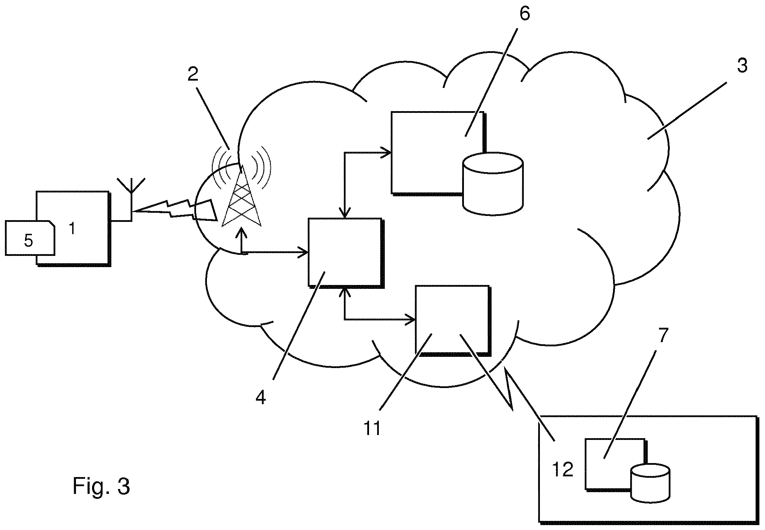

In another preferred embodiment as shown in FIG. 3 the parameter server 7 is not part of a cellular network but situated outside, but accessible for the cellular network. Via the packet data network gateway 11 the parameter server 7, preferably situated in the internet, where it is accessible from virtually all cellular networks in the world. The parameter server is in particular part of a remote configuration server 12.

Hence, it is of no relevance of the wireless device is operating in the home or a visited cellular network. It is only important that the routing information for accessing the parameter server 7 is available at the wireless device's site. For that preferably the routing information, in particular by way of a uniform resource identifier (URI), is stored within the identification unit 5.

In another preferred embodiment an identification token like a virtual access name is stored in the identification unit. That requires that the cellular network where the wireless device is operating in, provides a name server. The name server is configured to resolve the identification token resp. the virtual access name to a URI, and consequently the parameter server 7 is accessible with the resolved URI through the cellular network.

As a matter of optimization it is in particular foreseen as another preferred embodiment that the requested VoLTE parameter are not downloaded in each case in its entirety but only the difference to the previous resp. the stored version of the VoLTE parameter.

The same applies to the identification unit comprising at least one second memory block for VoLTE parameter of visited cellular networks.

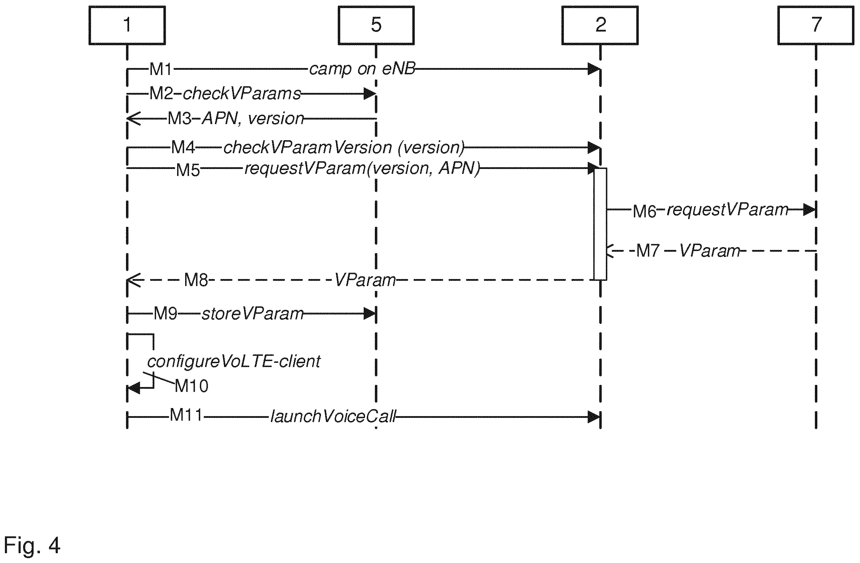

FIG. 4 shows in a sequence diagram in another preferred embodiment of the invention the steps of initialisation of the wireless device for configuring the VoLTE client accordingly in order to be able to carry out VoLTE calls within a LTE cellular network.

The wireless device 1 is operating with a base node 2, in particular an eNodeB of the cellular network 3. Further the wireless device 1 is equipped with an identification unit 5.

In this exemplary embodiment the procedure starts with registration of the wireless device with message M1. As part of that the wireless device 1 is consequently camping on base node 2. This message comprises in particular information regarding capabilities of the wireless device etc.

After that the wireless device 1 checks with message M2 sent to the identification unit 2, if VoLTE parameter for the currently visited (including home) cellular network are stored in the identification unit. In this embodiment there are VoLTE parameter stored accompanied with a version indicator, hence the identification unit indicates with response message M3 this information and the version indicator to the wireless device.

As part of this message it further provides routing information, in particular an access point name (APN) of the parameter server 7.

To figure out if the VoLTE parameter are up to date and usable, the wireless device sends with message M4 a request to the base node 2 for checking if the stored set of VoLTE parameter is up to date. Preferably the base node has this information available in the E-UTRAN or in the EPC by comparing the submitted version indicator with the version indicator of the current up to date VoLTE parameter set available at the parameter server. Otherwise a request to the parameter server 7, indicated by the APN is necessary. In that case with this request to the base node the APN would need to be submitted as well. Preferably this operation is combined with the request for the VoLTE parameter to the parameter server 7, and here the comparison of version indicators is carried out.

Provided that the request M4 has the result, that the current version of the VoLTE parameter is not up to date, the following steps need to be carried out. Otherwise it can directly be jumped to message M10.

Hence the wireless device needs to retrieve the up to date VoLTE parameter. For that the wireless device 1 is configured to send a request M5 to the base node 2 addressing the parameter server and requesting for an up to date set of VoLTE parameter for the currently visited cellular network. Preferably this requests comprises the current version number and the APN.

At the base node 2, resp. in components of the EPC this request is handled and addressed to the parameter server 7 identified with the submitted APN. This is handled by message M6 to the parameter server 7.

With message M7 the parameter sends a response comprising the requested VoLTE parameter or at least representations thereof. Such representations are in particular a difference to previous versions, class identifier indicating certain classes of parameter settings etc.

From the base node 2 the wireless device 1 receives with response message M8 the VoLTE parameter. First the received VoLTE parameter are forwarded for storage with message M9 to the identification unit 5. By doing so the wireless device is able to retrieve these data at the next registration event directly after the response to step M4 indicates that the stored VoLTE parameter are up to date.

Further the wireless device configures its VoLTE client, shown with message M10. After that the VoLTE client, that means the wireless device is in the position to carry out VoLTE calls. Consequently, later during the session of the wireless device within the cellular network, the wireless device launches a VoLTE voice call with message M11 to the base node 2.

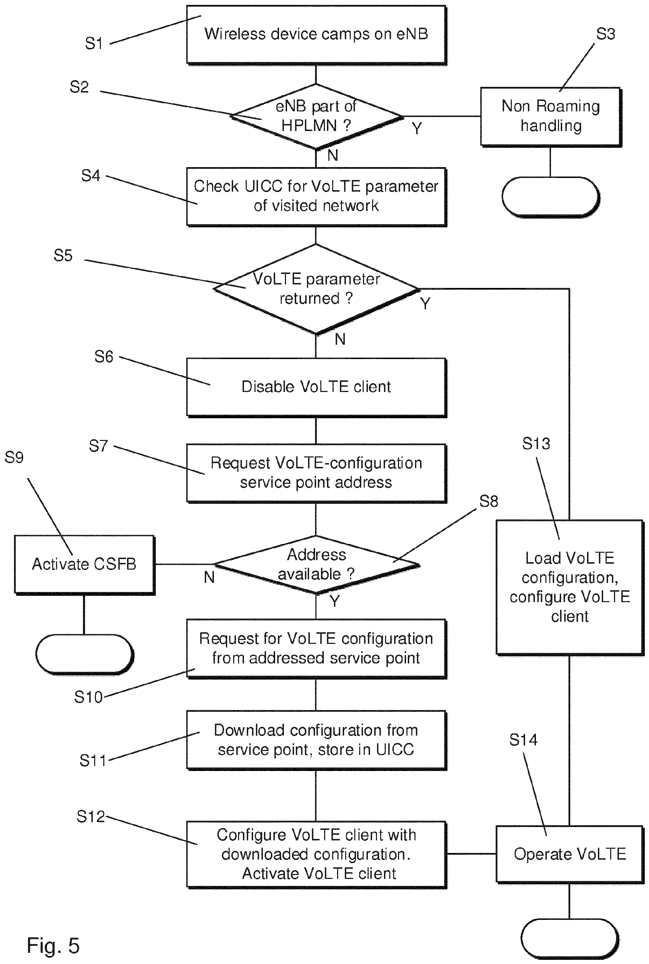

FIG. 5 shows in a flow chart another exemplary embodiment of the inventive method indicating the situation of a wireless device in a roaming situation.

It starts with step S1 where the wireless device registers at an eNodeB of a LTE cellular network. After that, the wireless device is camping on said eNodeB.

As first step S2 after registration the wireless device checks, if the eNodeB is part of the home cellular network. If so, the non-roaming handling can be carried out, here indicated with step S3.

If the cellular network of the eNodeB is indeed not part of the home cellular network of the wireless device (and its identification unit), then the wireless device is in roaming status. Hence the following steps beginning with S4 are carried out.

First it is checked with the identification unit, resp. UICC, if VoLTE parameter for the visited cellular network are available.

In decision step S5 it is branched to step S13, if the VoLTE parameter are available. In that case the VoLTE parameter are loaded from the UICC, the VoLTE client is configured with the loaded VoLTE parameter and consequently the wireless device can operate VoLTE (S14). Preferably at this step it is further checked if the version of the stored VoLTE parameter are up to date. If not, the process flow would continue as if no VoLTE parameter were there.

If no VoLTE parameter are present, it is branched in step S5 to step S6. That is at first the VoLTE client is disabled. This is advantageous for the case that a VoLTE call comes in before the configuration steps are finished, as this one could not be answered, and is thus rejected or handled otherway, e.g. via Circuit Switched Fallback (CSFB).

In the next step S7 the wireless device desires the address of the parameter server, in particular the service point for loading VoLTE parameter. That service point is in particular the remote configuration server 12 shown in FIG. 3. Preferably the wireless device requests the address of the remote configuration server, resp. the parameter server from the UICC. Advantageously the UICC is pre-configured from the home cellular network with an URI, an APN or an identification token which is then resolved by a name server inside the cellular network.

Alternatively the service point address could additionally be retrieved from the cellular network directly. That would preferably be requestable from the HSS. If that address is not available, the process flow branches in step S8 to step S9, where preferably - if supported by the eNodeB and the wireless device - the Circuit Switched Fallback (CSFB) is activated. If this is not available, the wireless device might not be ready for serving voice calls, at least not when operating on the current eNodeB, in the LTE RAN.

If the address is available in step S8, the process flow branches to step S10, where with the retrieved address of the VoLTE configuration service point a request for an up to date set of VoLTE parameter is requested. In an in particular advantageous embodiment a version of currently available VoLTE parameter is supplied with the request. This is in particular advantageous if in a previous step it was figured out that indeed VoLTE parameter are available at the UICC, but it turns out by checking, in particular with the parameter server, the actual version, that the stored VoLTE parameter are outdated. Provided the request is successful and the requested VoLTE parameter are available at the parameter server, then in the next step S11 the requested VoLTE parameter are downloaded from the parameter server and stored in the UICC. Otherwise it is preferably switched to CSFB as well, if available. Consequently the VoLTE client of the wireless device is configured with the downloaded VoLTE parameter in step S12. Finally the VoLTE client can then be activated, and the wireless device is hence ready to operate in VoLTE (S14), should a VoLTE call come in or be launched by the wireless device itself. Preferably the capability of operating VoLTE is indicated to the application processor of the wireless device and thus can e.g. be indicated in the user interface of the wireless device.

These exemplary embodiments show some of the essential operations capable with the present inventive method and its embodiments. It shows, that both for the situation of a wireless device operating in its home cellular networks as well as in a visited cellular network measures are foreseen to seamlessly configure the wireless device in order to be operable in VoLTE wherever it is available.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims.

## Claims

1. Method for a wireless device (1) of providing a voice service via packet switched communication with an operating cellular network (3), being the cellular network the wireless device is operating in,
wherein the wireless device is physically connected to an identification unit (5), said identification unit comprising a first memory block for storing at least one set of configuration parameters for said voice service within a first cellular network (8), the first cellular network according to the identification unit is different from the operating cellular network (3), hereinafter the visited cellular network,
further the wireless device is camping on a base node (2) of the visited cellular network,
the method comprising the step for the wireless device of:
- prior to setting up a voice call, checking with the identification unit if a set of configuration parameters applicable to the visited cellular network is available,
- if a set of configuration parameters applicable to the visited cellular network is not available, requesting said configuration parameters from a parameter server (7) accessible for the visited cellular network by means of routing information,
- receiving said configuration parameters from said parameter server,
- storing at least a portion of received configuration parameters in a second memory block of the identification unit,
- if a set of configuration parameters applicable to the visited cellular network is available, or previously received from the parameter server:
- applying said configuration parameters to the wireless device,
- setting up a voice call using said configuration parameters.

2. Method according to claim 1,
wherein the parameter server (7) is a configuration server being part of the visited cellular network,
further comprising the step of:
- retrieving from the first cellular network said routing information of said configuration server of the visited cellular network.

3. Method according to claim 1,
wherein the parameter server is a remote configuration server (12), and said routing information relating to the remote configuration server is stored in the identification unit.

4. Method according to claim 2 or 3,
wherein the second memory block is part of at least one of
- the wireless device (1),
- said identification unit (5), or
- a combination of both.

5. Method according to at least one of the claims 2 to 3,
wherein the routing information relating to the parameter server (7) comprises at least one out of:
- an access point name,
- an unified resource identifier,
- an identification token, adapted to be submitted to a name server being part of the operating cellular network (3), which is configured to resolve the identification token in routing information.

6. Method according to at least one of the claims 1 to 5,
wherein the step of receiving of said configuration parameter(s) comprises reception of parameter data indicating the difference between stored configuration parameter(s) and requested configuration parameter(s) for the cellular network.

7. Method according to at least one of the claims 1 to 6,
wherein the step of requesting of said configuration parameter(s) is carried out in response to expiry of a time trigger.

8. Method according to at least one of the claims 1 to 7,
wherein during requesting of said configuration parameter(s) a version indicator is submitted to the parameter server (7), the version indicator being unique for a certain set of configuration parameters, and wherein the parameter server submits said configuration parameter(s) in case said version indicator indicates an earlier version than the configuration parameter(s) available at the parameter server.

9. Wireless device (1) for operating in a cellular network (3) by means of a camping on a base node (2) of the operating cellular network, the wireless device being configured to provide voice service via packet switched communication with a cellular network, further being physically connected to an identification unit (5), said identification unit comprising a first memory block for storing at least one set of configuration parameters for said voice service within a first cellular network, (8), the first cellular network according to the identification unit is different from the operating cellular network (3), hereinafter the visited cellular network,
said wireless device is further configured, prior to setting up a voice call, to check with the identification unit if a set of configuration parameters applicable to the visited cellular network is available,
- if a set of configuration parameters applicable to the visited cellular network is not available, request said configuration parameter(s) from a parameter server (7)
accessible for the visited cellular network by means of routing information,
- receive said configuration parameters from said parameter server,
- store at least a portion of received configuration parameters in a second memory block of the identification unit,
- if a set of configuration parameters applicable to the visited cellular network is available, or previously received from the parameter server:
- apply said configuration parameters to the wireless device,
- set up a voice call using said configuration parameters.

10. Wireless device (1) according to claim 9,
wherein the parameter server (7) is a configuration server being part of the visited cellular network,
the wireless device further being configured to:
- retrieve from the first cellular network said routing information comprising an access point name of said configuration server of the visited cellular network,
- and said second memory block being part of at least one of
- the wireless device,
- said identification unit (5), or
- a combination of both.

11. Wireless device (1) according to claim 9,
wherein the parameter server is a remote configuration server, and said routing information relating to the remote configuration server (12) is stored in the identification unit,
and said second memory being part of at least one of
- the wireless device,
- said identification unit, or
- a combination of both.

12. Wireless device (1) according to at least one of the claims 10 or 11, wherein the routing information relating to the parameter server (7) comprises at least one out of:
- an access point name,
- an unified resource identifier,
- an identification token, wherein the wireless device is further configured to submit said identification token to a name server being part of the operating cellular network, for resolving the identification token in routing information.

13. Wireless device (1) according to at least one of the claims 9 to 12, further configured, in response to requesting said configuration parameter(s), to receive parameter data indicating the difference between stored configuration parameter(s) and requested configuration parameter(s) for the cellular network, and prior to storing said configuration parameter(s), to derive said requested configuration parameter(s) from the received parameter data and the stored configuration parameter(s).

14. Wireless device (1) according to at least one of the claim 9 to 13, further configured to submit in conjunction with said request for said configuration parameter(s) a version indicator to the parameter server (7), the version indicator being unique for a certain set of configuration parameters.

15. Parameter server (7) for providing configuration parameter(s) for a voice service via packet switched communication in a cellular network (3) the parameter server is accessible from, the parameter server configured:
to receive a request for configuration parameter(s) for a voice service, from a wireless device (1) operating in the cellular network, the said request comprising a version indicator being unique for a certain set of configuration parameters stored in the identification unit of the wireless device for said voice service, to compare said received version indicator with the version indicator assigned to the set of configuration parameters stored for the cellular network and which is accessible for the parameter server,
and to submit said stored set of configuration parameters to the requesting wireless device, when the received version indicators indicated an earlier version than the version indicator of the stored set of configuration parameters.

## Patentansprüche

1. Verfahren für ein Drahtlosgerät (1) zum Bereitstellen eines Sprachdienstes über eine paketvermittelte Kommunikation mit einem arbeitenden zellularen Netz (3), wobei es sich um das zellulare Netz handelt, in dem das Drahtlosgerät arbeitet,
wobei das Drahtlosgerät physisch mit einer Identifikationseinheit (5) verbunden ist, wobei die Identifikationseinheit einen ersten Speicherblock zum Speichern mindestens eines Satzes von Konfigurationsparametern für den Sprachdienst innerhalb eines ersten zellularen Netzes (8) umfasst, wobei sich das erste zellulare Netz gemäß der Identifikationseinheit von dem arbeitenden zellularen Netz (3), nachstehend das besuchte zellulare Netz, unterscheidet, das Drahtlosgerät ferner auf einem Basisknoten (2) des besuchten zellularen Netzes kampiert, wobei das Verfahren für das Drahtlosgerät den Schritt umfasst:
- vor dem Aufbau eines Sprachanrufs, Überprüfen mit der Identifizierungseinheit, ob ein Satz von Konfigurationsparametern für das besuchte zellulare Netz verfügbar ist,
- wenn ein Satz von Konfigurationsparametern, die auf das besuchte zellulare Netz anwendbar sind, nicht verfügbar ist, Anfordern der Konfigurationsparameter von einem Parameter-Server (7), der für das besuchte zellulare Netz mittels Routing-Information zugänglich ist,
- Empfangen der Konfigurationsparameter von dem Parameter-Server,
- Speichern mindestens eines Teils der empfangenen Konfigurationsparameter in einem zweiten Speicherblock der Identifikationseinheit,
- wenn ein Satz von Konfigurationsparametern für das besuchte zellulare Netz verfügbar ist oder zuvor vom Parameter-Server empfangen wurde:
- Anwenden der Konfigurationsparameter auf das Drahtlosgerät,
- Aufbauen eines Sprachanrufs unter Verwendung der Konfigurationsparameter.

2. Verfahren nach Anspruch 1,
wobei der Parameter-Server (7) ein Konfigurationsserver ist, der Teil des besuchten zellularen Netzes ist,
ferner umfassend den Schritt:
- Abrufen der Routing-Information des Konfigurationsservers des besuchten zellularen Netzes aus dem ersten zellularen Netz.

3. Verfahren nach Anspruch 1,
wobei der Parameter-Server ein Fernkonfigurationsserver (12) ist und die Routing-Information, die sich auf den Fernkonfigurationsserver bezieht, in der Identifikationseinheit gespeichert ist.

4. Verfahren nach Anspruch 2 oder Anspruch 3,
wobei der zweite Speicherblock Teil von mindestens einem von
- dem Drahtlosgerät (1),
- der Identifikationseinheit (5) oder
- einer Kombination von beiden ist.

5. Verfahren nach mindestens einem der Ansprüche 2 bis 3,
wobei die Routing-Informationen, die sich auf den Parameter-Server (7) beziehen, mindestens eines von Folgendem umfassen:
- einen Zugangspunktnamen,
- eine einheitliche Ressourcenkennung,
- ein Identifikationstoken, das angepasst ist, um an einen Nameserver übertragen zu werden, der Teil des arbeitenden zellularen Netzes (3) ist, das konfiguriert ist, um das Identifikationstoken in Routing-Informationen aufzulösen.

6. Verfahren nach mindestens einem der Ansprüche 1 bis 5,
wobei der Schritt des Empfangens der (des) Konfigurationsparameter(s) das Empfangen von Parameterdaten umfasst, die den Unterschied zwischen gespeichertem/n Konfigurationsparameter(n) und angefordertem/n Konfigurationsparameter(n) für das zellulare Netz anzeigen.

7. Verfahren nach mindestens einem der Ansprüche 1 bis 6,
wobei der Schritt des Anforderns der (des) Konfigurationsparameter(s) als Reaktion auf das Ablaufen eines Zeitauslösers ausgeführt wird.

8. Verfahren nach mindestens einem der Ansprüche 1 bis 7,
wobei während des Anforderns der (des) Konfigurationsparameter(s) ein Versionsindikator an den Parameter-Server (7) übertragen wird, wobei der Versionsindikator für einen bestimmten Satz von Konfigurationsparametern eindeutig ist, und wobei der Parameter-Server den (die) Konfigurationsparameter übermittelt, für den Fall, dass der Versionsindikator eine frühere Version anzeigt als der (die) Konfigurationsparameter, der (die) auf dem Parameter-Server verfügbar ist (sind).

9. Drahtlosgerät (1) zum Arbeiten in einem zellularen Netz (3) mittels eines Kampierens auf einem Basisknoten (2) des arbeitenden zellularen Netzes, wobei das Drahtlosgerät so konfiguriert ist, dass es einen Sprachdienst über paketvermittelte Kommunikation mit einem zellularen Netz bereitstellt, wobei es ferner physisch mit einer Identifizierungseinheit (5) verbunden ist, wobei die Identifizierungseinheit einen ersten Speicherblock zum Speichern mindestens eines Satzes von Konfigurationsparametern für den Sprachdienst innerhalb eines ersten zellularen Netzes (8) umfasst, wobei sich das erste zellulare Netz gemäß der Identifizierungseinheit von dem arbeitenden zellularen Netz (3), nachfolgend das besuchte zellulare Netz, unterscheidet,
wobei das Drahtlosgerät vor dem Aufbauen eines Sprachanrufs ferner konfiguriert ist zum Überprüfen mit der Identifikationseinheit, ob ein Satz von Konfigurationsparametern verfügbar ist, die für das besuchte zellulare Netz gelten,
- wenn ein Satz von Konfigurationsparametern, die auf das besuchte zellulare Netz anwendbar sind, nicht verfügbar ist, Anfordern der (des) Konfigurationsparameter(s) von einem Parameter-Server (7), der für das besuchte zellulare Netz mittels Routing-Information zugänglich ist,
- Empfangen der Konfigurationsparameter von dem Parameter-Server,
- Speichern mindestens eines Teils der empfangenen Konfigurationsparameter in einem zweiten Speicherblock der Identifikationseinheit,
- wenn ein Satz von Konfigurationsparametern für das besuchte zellulare Netz verfügbar ist oder zuvor vom Parameter-Server empfangen wurde:
- Anwenden der Konfigurationsparameter auf das Drahtlosgerät,
- Aufbauen eines Sprachanrufs unter Verwendung der Konfigurationsparameter.

10. Drahtlosgerät (1) nach Anspruch 9,
wobei der Parameter-Server (7) ein Konfigurationsserver ist, der Teil des besuchten zellularen Netzes ist,
wobei das Drahtlosgerät ferner konfiguriert ist zum:
- Abrufen der Routing-Informationen, die einen Zugangspunktnamen des Konfigurationsservers des besuchten zellularen Netzes umfassen, aus dem ersten Mobilfunknetz,
- und wobei der zweite Speicherblock Teil von mindestens einem von
- dem Drahtlosgerät,
- der Identifikationseinheit (5) oder
- einer Kombination von beiden ist.

11. Drahtlosgerät (1) nach Anspruch 9,
wobei der Parameter-Server ein Fernkonfigurationsserver ist und die Routing-Information, die sich auf den Fernkonfigurationsserver (12) bezieht, in der Identifikationseinheit gespeichert ist, und der zweite Speicher Teil von mindestens einem von
- dem Drahtlosgerät,
- der Identifikationseinheit oder
- einer Kombination von beiden ist.

12. Drahtlosgerät (1) nach mindestens einem der Ansprüche 10 oder 11, wobei die Routing-Informationen, die sich auf den Parameter-Server (7) beziehen, mindestens eines von Folgendem umfassen:
- einen Zugangspunktnamen,
- eine einheitliche Ressourcenkennung,
- ein Identifikationstoken, wobei das Drahtlosgerät ferner konfiguriert ist, um das Identifikationstoken an einen Nameserver zu übertragen, der Teil des arbeitenden zellularen Netzes ist, um das Identifikationstoken in Routing-Informationen aufzulösen.

13. Drahtlosgerät (1) nach mindestens einem der Ansprüche 9 bis 12, ferner so konfiguriert, dass es als Reaktion auf die Anforderung der (des) Konfigurationsparameter(s) Parameterdaten empfängt, die die Differenz zwischen gespeicherten Konfigurationsparametern und angeforderten Konfigurationsparametern für das zellulare Netz anzeigen, und vor dem Speichern der (des) Konfigurationsparameter(s) den (die) angeforderten Konfigurationsparameter aus den empfangenen Parameterdaten und dem (den) gespeicherten Konfigurationsparameter(n) ableitet.

14. Drahtlosgerät (1) nach mindestens einem der Ansprüche 9 bis 13, ferner so konfiguriert, dass es in Verbindung mit der Anforderung für die Konfigurationsparameter einen Versionsindikator an den Parameter-Server (7) überträgt, wobei der Versionsindikator für einen bestimmten Satz von Konfigurationsparametern eindeutig ist.

15. Parameter-Server (7) zum Bereitstellen von Konfigurationsparametern für einen Sprachdienst über paketvermittelte Kommunikation in einem zellularen Netz (3), von dem aus auf den Parameter-Server zugegriffen werden kann, wobei der Parameter-Server konfiguriert ist:
um eine Anforderung von Konfigurationsparametern für einen Sprachdienst von einem Drahtlosgerät (1) zu empfangen, das in dem zellularen Netz arbeitet, wobei die Anforderung einen Versionsindikator umfasst, der für einen bestimmten Satz von Konfigurationsparametern, die in der Identifizierungseinheit des Drahtlosgeräts für den Sprachdienst gespeichert sind, eindeutig ist, um den empfangenen Versionsindikator mit dem Versionsindikator zu vergleichen, der dem Satz von Konfigurationsparametern zugeordnet ist, der für das zellulare Netz gespeichert ist und auf den der Parameter-Server zugreifen kann, und um den gespeicherten Satz von Konfigurationsparametern dem anfordernden Drahtlosgerät zu übermitteln, wenn die empfangenen Versionsindikatoren eine frühere Version als der Versionsindikator des gespeicherten Satzes von Konfigurationsparametern anzeigen.

## Revendications

1. Procédé destiné à un dispositif sans fil (1) de fourniture d'un service vocal via une communication à commutation de paquets avec un réseau cellulaire en fonctionnement (3), qui est le réseau cellulaire dans lequel fonctionne le dispositif sans fil,
dans lequel le dispositif sans fil est physiquement connecté à une unité d'identification (5), ladite unité d'identification comprenant un premier bloc de mémoire permettant de stocker au moins un ensemble de paramètres de configuration pour ledit service vocal dans un premier réseau cellulaire (8) et le premier réseau cellulaire selon l'unité d'identification étant différent du réseau cellulaire en fonctionnement (3), ci-après le réseau cellulaire visité,
en outre, le dispositif sans fil repose sur un nœud de base (2) du réseau cellulaire visité,
le procédé comprenant, pour le dispositif sans fil, l'étape suivante :
- avant l'établissement d'un appel vocal, vérifier, auprès de l'unité d'identification, la disponibilité d'un ensemble de paramètres de configuration applicables au réseau cellulaire visité,
- en cas d'indisponibilité d'un ensemble de paramètres de configuration applicables au réseau cellulaire visité, demander lesdits paramètres de configuration à un serveur de paramètres (7) accessible pour le réseau cellulaire visité au moyen d'informations de routage,
- recevoir lesdits paramètres de configuration dudit serveur de paramètres,
- stocker au moins une partie des paramètres de configuration reçus dans un second bloc de mémoire de l'unité d'identification,
- si un ensemble de paramètres de configuration applicables au réseau cellulaire visité est disponible ou reçu précédemment du serveur de paramètres :
- appliquer lesdits paramètres de configuration au dispositif sans fil,
- établir un appel vocal à l'aide desdits paramètres de configuration.

2. Procédé selon la revendication 1,
dans lequel le serveur de paramètres (7) est un serveur de configuration faisant partie du réseau cellulaire visité,
comprenant en outre l'étape suivante :
- récupérer à partir du premier réseau cellulaire lesdites informations de routage dudit serveur de configuration du réseau cellulaire visité.

3. Procédé selon la revendication 1,
dans lequel le serveur de paramètres est un serveur de configuration distant (12) et lesdites informations de routage relatives au serveur de configuration distant sont stockées dans l'unité d'identification.

4. Procédé selon la revendication 2 ou 3,
dans lequel le second bloc de mémoire fait partie d'au moins un parmi
- le dispositif sans fil (1),
- ladite unité d'identification (5) ou
- une combinaison des deux.

5. Procédé selon au moins l'une des revendications 2 ou 3,
dans lequel les informations de routage relatives au serveur de paramètres (7) comprennent au moins un parmi :
- un nom de point d'accès,
- un identifiant de ressource unifié,
- un jeton d'identification, adapté pour être soumis à un serveur de noms faisant partie du réseau cellulaire en fonctionnement (3), qui est configuré pour résoudre le jeton d'identification dans les informations de routage.

6. Procédé selon au moins l'une des revendications 1 ou 5,
dans lequel l'étape de réception dudit ou desdits paramètres de configuration comprend la réception de données de paramètres indiquant la différence entre le ou les paramètres stockés de configuration et le ou les paramètres demandés de configuration destinés au réseau cellulaire.

7. Procédé selon au moins l'une des revendications 1 ou 6,
dans lequel l'étape de demande dudit ou desdits paramètres de configuration a lieu en réponse à l'expiration d'un déclencheur temporel.

8. Procédé selon au moins l'une des revendications 1 ou 7,
dans lequel, lors de la demande dudit ou desdits paramètres de configuration, un indicateur de version est soumis au serveur de paramètres (7), l'indicateur de version étant unique pour un certain ensemble de paramètres de configuration et dans lequel le serveur de paramètres soumet ledit ou lesdits paramètres de configuration au cas où ledit indicateur de version indique une version antérieure au ou aux paramètres de configuration disponibles sur le serveur de paramètres.

9. Dispositif sans fil (1) devant fonctionner dans un réseau cellulaire (3) au moyen d'une résidence sur un nœud de base (2) du réseau cellulaire en fonctionnement, le dispositif sans fil étant configuré pour fournir un service vocal via une communication à commutation de paquets avec un réseau cellulaire, étant en outre physiquement connecté à une unité d'identification (5), ladite unité d'identification comprenant un premier bloc de mémoire permettant de stocker au moins un ensemble de paramètres de configuration pour ledit service vocal à l'intérieur d'un premier réseau cellulaire (8), le premier réseau cellulaire selon l'unité d'identification étant différent du réseau cellulaire en fonctionnement (3), ci-après le réseau cellulaire visité,
ledit dispositif sans fil étant en outre configuré pour vérifier grâce à l'unité d'identification si un ensemble de paramètres de configuration applicables au réseau cellulaire visité est disponible, avant d'établir un appel vocal,
- en cas d'indisponibilité d'un ensemble de paramètres de configuration applicables au réseau cellulaire visité, pour demander ledit ou lesdits paramètres de configuration à un serveur de paramètres (7) accessible pour le réseau cellulaire visité au moyen d'informations de routage,
- pour recevoir lesdits paramètres de configuration dudit serveur de paramètres,
- pour stocker au moins une partie des paramètres de configuration reçus dans un second bloc de mémoire de l'unité d'identification,
- si un ensemble de paramètres de configuration applicables au réseau cellulaire visité est disponible ou reçu précédemment du serveur de paramètres :
- pour appliquer lesdits paramètres de configuration au dispositif sans fil,
- pour établir un appel vocal à l'aide desdits paramètres de configuration.

10. Dispositif sans fil (1) selon la revendication 9,
dans lequel le serveur de paramètres (7) est un serveur de configuration faisant partie du réseau cellulaire visité,
le dispositif sans fil étant en outre configuré pour :
- récupérer à partir du premier réseau cellulaire lesdites informations de routage comprenant un nom de point d'accès dudit serveur de configuration du réseau cellulaire visité,
- et ledit second bloc de mémoire faisant partie d'au moins un parmi
- le dispositif sans fil,
- ladite unité d'identification (5) ou
- une combinaison des deux.

11. Dispositif sans fil (1) selon la revendication 9,
dans lequel le serveur de paramètres est un serveur de configuration distant et lesdites informations de routage relatives au serveur de configuration distant (12) sont stockées dans l'unité d'identification,
et ladite seconde mémoire faisant partie d'au moins un parmi
- le dispositif sans fil,
- ladite unité d'identification ou
- une combinaison des deux.

12. Dispositif sans fil (1) selon au moins l'une des revendications 10 ou 11, dans lequel les informations de routage relatives au serveur de paramètres (7) comprennent au moins un parmi :
- un nom de point d'accès,
- un identifiant de ressource unifié,
- un jeton d'identification, le dispositif sans fil étant en outre configuré pour soumettre ledit jeton d'identification à un serveur de noms, faisant partie du réseau cellulaire en fonctionnement, pour résoudre le jeton d'identification dans les informations de routage.

13. Dispositif sans fil (1) selon au moins l'une des revendications 9 à 12, configuré en outre pour recevoir, en réponse à la demande dudit ou desdits paramètres de configuration, des données de paramètres indiquant la différence entre le ou les paramètres stockés de configuration et le ou les paramètres demandés de configuration pour le réseau cellulaire et, avant de stocker ledit ou lesdits paramètres de configuration, pour dériver ledit ou lesdits paramètres demandés de configuration à partir des données reçues de paramètres et du ou des paramètres stockés de configuration.

14. Dispositif sans fil (1) selon au moins l'une des revendications 9 à 13, configuré en outre pour soumettre, en conjonction avec ladite demande pour ledit ou lesdits paramètres de configuration, un indicateur de version au serveur de paramètres (7), l'indicateur de version étant unique pour un certain ensemble de paramètres de configuration.

15. Serveur de paramètres (7) permettant de fournir un ou plusieurs paramètres de configuration pour un service vocal via une communication à commutation de paquets dans un réseau cellulaire (3) à partir duquel le serveur de paramètres est accessible, le serveur de paramètres étant configuré :
pour recevoir une demande d'un ou de plusieurs paramètres de configuration pour un service vocal, d'un dispositif sans fil (1) fonctionnant dans le réseau cellulaire, ladite demande comprenant un indicateur de version qui est unique pour un certain ensemble de paramètres de configuration stockés dans l'unité d'identification du dispositif sans fil pour ledit service vocal, pour comparer ledit indicateur de version reçu avec l'indicateur de version affecté à l'ensemble de paramètres stockés de configuration pour le réseau cellulaire et qui est accessible pour le serveur de paramètres et pour soumettre ledit ensemble stocké de paramètres de configuration au dispositif sans fil demandeur, lorsque les indicateurs reçus de version indiquaient une version antérieure à l'indicateur de version de l'ensemble stocké de paramètres de configuration.
